# EUROPEAN PATENT SPECIFICATION

(11) **EP 0 632 045 B1**
(45) Date of publication and mention of the grant of the patent: **03.05.2000**
(21) Application number: 94304609.4
(22) Date of filing: 24.06.1994
(51) Int. Cl.: C07F 7/22, C08K 5/58

(54) **Continuous process for making a dialkyltin thiocarboxylic acid ester**
Kontinuierliches Verfahren zur Herstellung von Dialkylzinn-Thiocarbonsäureestern
Procédé continue pour la production d'esters d'étain dialkyl et d'acides thiocarboxyliques

(30) Priority: 29.06.1993 US 84381
(43) Date of publication of application: 04.01.1995
(73) Proprietor: Morton International, Inc., Chicago, Illinois 60606-1596 (US)
(72) Inventor: Kolin, Kevin S., Chicago, Illinois 60657 (US); Siegmann, Anthony J., Middletown, Ohio 45044 (US)
(74) Representative: Bankes, Stephen Charles Digby

(56) References cited:
- EP-A- 0 081 458
- GB-A- 1 374 024
- US-A- 4 554 368

## Description

This invention relates to PVC stabilizers. In particular, it relates to a method for making an alkyltin thiocarboxylic acid ester from the corresponding alkyltin halide and thiocarboxylic ester. More particularly, it relates to a method for continuously synthesizing such an ester in an aqueous medium in a single vessel with extremely vigorous agitation.

Because of the drawbacks associated with the use of an organic solvent in batchwise preparations of such esters in the past (e.g., diminished yields based on the space and time allotted to the process), some have turned to methods in which the product is still made batchwise but with the elimination of the organic solvent. These, too, have their shortcomings. If the reaction mixture is strongly alkaline at the beginning of a batch, the pH decreases only gradually as the alkyltin halide is introduced; such conditions favor the hydrolysis of the starting materials. To minimize such hydrolysis, low temperatures are necessary during the rather long holding times associated with batchwise procedures. Side reactions such as the formation of alkyltin oxide by the reaction of ammonium hydroxide (an acid acceptor) and the alkyltin halide, and the base-catalyzed hydrolysis of the thiocarboxylic ester cause loss of desired product and produce materials which often cause the formation of a tenacious, stringy emulsion, the breaking of which requires a rather difficult and wasteful filtration.

Maul *et al* (EP-A-81458 and U. S. Patent 4,554,368) propose to provide a continuous process for the Preparation of these esters which comprises carrying out the reaction continuously in a system consisting of 1 to 5 agitated vessels with an average dwell time of 1 to 60 minutes at a constant pH value in the range from 3 to 8 and at a temperature from 40 to 80°C. Maul teaches that it is convenient to initiate the reaction batchwise, pumping the alkyltin chloride and the thiocarboxylic acid ester in the required molar ratio into the first reactor to fill it halfway before an aqueous solution of the base is added with stirring to raise the pH to the desired value. Then, the continuous addition of base, ester, and chloride is started and the volume of the reaction mixture is controlled by pumping it into a second agitator vessel. It is not clear that the continuous process described by Maul in terms of two agitator vessels would be successful when only one agitator vessel is used.

GB-A 1374024 discloses a process for preparing a di-organotin-bis(thioglycollate ester) from a di-organotin oxide and a mercaptocarboxylic acid ester, wherein a mixture of these reactants is passed through a heat exchange zone, from the outlet of which the product is collected. Water is evaporated as a by-product and removed as vapour from the heat exchange zone. The reaction mixture is heated and stirred within the heat exchange zone.

There remains a need for a continuous process for the preparation of alkyltin thioglycolic acid esters from the corresponding halides and esters in an aqueous medium which produces a two phase product mixture which is substantially instantaneously separable in the absence of demulsification means.

There remains a further need for a process for the preparation of alkyltin thioglycolic acid esters from the corresponding halides and esters which is continuous from the start for an indefinitely long period wherein the use of but one agitator vessel for the reaction dramatically increases the yield of product on the basis of the reactor volume employed and the time expended for the process.

The present invention consists in a method for the continuous manufacture of an alkyltin thiocarboxylic acid ester comprising simultaneously adding an alkyltin halide, a thiocarboxylic acid ester, and an acid acceptor to an agitated aqueous medium in a reaction vessel over an indefinite period of time, agitating the mixture with one or more impellers at a turnover per minute rate of at least 90 at a residence time of 5 minutes or more and at least 110 at a residence time of 3.6 minutes or more throughout the volume of the mixture, maintaining the resulting reaction mixture at a pH greater than 7 but not more than 8.2, continuously withdrawing the mixture from said reaction vessel simultaneously with the addition of the reactants, and continuously separating it as it is withdrawn into an aqueous phase and an organic phase without the need for demulsification means.

There can thus be provided a continuous process for the manufacture of alkyltin thioglycolic acid esters that requires but one agitated reactor.

The alkyltin halide, thiocarboxylic acid ester, and acid acceptor can be simultaneously added to the single reactor, the resulting reaction mixture being stirred vigorously at a constantly alkaline pH value.

The size of equipment required for making a given volume of alkyltin thioglycolic acid esters can be reduced fifty-fold by the process of the invention.

The agitation of the mixture will generally impart a fluid velocity across the impeller(s) of at least 15.2 m (50 feet) per minute. If two or more impellers are used they should be spaced apart sufficiently to maintain said fluid velocity substantially throughout the operating volume.

In this context, substantially throughout means entirely throughout or so close to it that the difference is not meaningful.

The alkyltin thiocarboxylic ester preferably has the structure:

RₓSn[S(CH₂)ₙ(COOR']₄₋ₓ

wherein x is 1 or 2, and n is 1 or 2; R is a alkyl group having from one to four carbon atoms); and R' is an alkyl group having from eight to sixteen carbon atoms. The source of the R group is the lower-alkyltin halide as it reacts with the HS- group of the thiocarboxylic ester bearing the R' group. As used herein, the word halide means chloride or bromide. An alkyltin chloride is preferred. The halide is suitably a mixture of mono- and di-alkyl compounds which are accordingly the tri- or di-halide. A suitable ratio of the dialkyl to mono-alkyl groups in a mixture is from 10:1 to 1:10 by weight, preferably from 5:1 to 3:1, more preferably about 4:1. R is preferably methyl or butyl and more preferably methyl. R'is exemplified by n-octyl, iso-octyl, 2-ethylhexyl, tridecyl, and hexadecyl radicals. Examples of the alkyltin halides include monomethyltin trichloride, dimethyltin dichloride, mixtures thereof, monobutyltin trichloride, dibutyltin dichloride, and mixtures thereof. The thiocarboxylic acid esters are exemplified by 2-ethylhexylthioglycolate, isooctyl thioglycolate, 2-ethylhexylmercaptopropionate, and mixtures of such esters. The alkyltin halides and the thiocarboxylic acid esters are hereinafter referred sometimes to as organic reactants as opposed to the acid acceptor reactant.

The acid acceptor is preferably ammonium hydroxide but any of the conventionally used alkaline materials such as sodium hydroxide, potassium hydroxide, sodium carbonate, and a water-soluble amine is suitable.

The alkyltin halide is added as a water solution which is suitably about 50 % water by weight. It is preferable to charge the reactor with an amount of water equal to about 80% of the reactor volume before the addition of the reactants is commenced in order to provide an agitatable reaction medium at the outset. The simultaneous addition of the organic reactants and the acid acceptor is controlled by a computer programmed to set an initial set of addition rates and to change those rates as data from the reaction mixture is fed into the computer. The rate of addition of each organic reactant is determined by the stoichiometry of the reaction as it applies to the equivalent weights, the purity, and the concentration of each. In the special case of alkyltin halide mixtures, the ratio of di- and tri-halides and the consequent effective equivalent weight of the mixture is a determinant. The pH of the reaction mixture is also fed constantly into the computer so that the rate of addition of the acid acceptor reactant may be controlled to keep the reaction going at a substantially constant alkaline pH, preferably from about 8 to about 8.2. The simultaneous addition is suitably achieved by feeding each organic reactant through a separate tube extending below the surface of the liquid in the reactor to the level of the uppermost impeller. Said reactants may be fed through the inner and outer components of a coaxial tube.

Agitation of the mixture is suitably accomplished with a center-mounted LIGHTNIN Series XDQ, Model XDQ-75SCR mixer equipped with one or more A310 laser foil impellers. Said mixer has a 560 W (0.75 HP), variable speed (1750 RPM max), DC motor. Other mixers having similar capabilities are also suitable. The diameter of the impellers is selected as appropriate to the size and the design of the particular reactor vessel used, as exemplified hereinbelow.

The turnover rate (the statistical number of times per minute that a point within the liquid moves to the surface) is calculated by dividing the primary flow of the reaction mixture, which is also known as the pumping rate of the impellers in the system, by the operating volume. The speed of the impellers is, of course, only one of many factors determining the turnover rate. For example, a pair of 6.35 cm (2.5 inch) LIGHTNIN A310 laser foil impellers spaced apart 10.2 cm (4 inches) on a mixer shaft turning at 1200 RPM in a reaction mixture 20.3 cm (8 inches) deep in a baffled cylindrical vessel having a diameter of 12.7 cm (5 inches) caused a turnover rate of 120, and a pair of 13.2 cm (5.2 inch) A310 impellers spaced apart 10.2 cm (4 inches) on a mixer shaft turning at 1200 RPM in a reaction mixture 30.5 cm (12 inches) deep in a baffled cylindrical vessel having an 29.2 cm (11.5 inch) diameter caused a turnover rate of 128. The fluid velocity across the impellers is calculated by dividing the pumping rate of the impellers by the cross sectional area of the reactor. In the smaller system described above, the fluid velocity across the impellers is 24.7 m (81 feet) per minute whereas it is 39.3 m (129 feet) per minute at the same impeller speed in the larger system. A preferred mixer speed for the smaller system is from 1100 RPM to 1300 RPM.

An article entitled "Let's Understand Mixing" by Dr. James Y. Oldshue and published by Mixing Equipment Co., Inc. is hereby incorporated by reference for its discussion of the key mixing parameters and of the effect on other design variables when one parameter is held constant during scale-up calculations.

Still more preferably, the agitation speed is such that the turnover rate is at least 120. Although there is no maximum speed except for the practical limitations placed on the speed by the mountings for the mixer, the need to avoid excessive vibrations, and the economy of using no more mixing energy than is necessary, the turnover rate is preferably no more than 200. At these preferred turnover rates, the fluid velocity across the impeller(s) is at least 24.4 m (80 feet)/minute. When there is more than one impeller on the shaft of the mixer, the spacing between them is adjusted so that the turnover rate will be substantially uniform throughout the operating volume of the reaction mixture. The Z-factor or ratio of the liquid depth to the diameter of the reactor vessel is used by those of ordinary skill in the art of mixing to determine whether a second impeller is needed and what the spacing should be.

The reaction mixture is continuously drawn off at the bottom of the vessel through an overflow leg at the same rate as the total of the additions. Thus, the withdrawal of the reaction mixture from the stirred vessel is commenced promptly (i.e., within 30 seconds) after the start of the simultaneous additions and the commencement of the withdrawals is nearly simultaneous with the commencement of the additions. The residence time for the reaction mixture in the stirred vessel is suitably within the range of from 2 minutes to 6 minutes. The mixture is then piped continuously into a separation unit wherein the separation of the aqueous phase is continuous and essentially instantaneous without the need of filtration or any other demulsification means. A gravity settling separation tank and a liquid/liquid centrifugal separator are both suitable. The continuous stream of the organic phase is preferably washed with fresh water and then flash dried with heat and vacuum before being clarified by filtration. Finally, the clear product is piped into a storage tank or directly into machines for filling shipping containers. The wash water may be recycled into the reactor as part of the continuous make-up of the reaction mixture.

The operating temperature of the reaction mixture is preferably about 50°C but because the pH is maintained between 7 and 8.2 excursions into the 75-80°C range are not harmful. A temperature of from 40 to 50°C is suitable if one wishes to absorb the heat of reaction with cooling water; a temperature of 55-60 may be maintained by the adiabatic operation of the method. As a practical matter, the maintenance of the pH between 7 and 8 is extremely difficult because of the wide swings of a pH meter between those values during the addition of reactants and acid acceptor. Therefore, it is much preferred to maintain the pH at 8-8.2. It will be appreciated by those of ordinary skill in the art that although the addition of the acid acceptor is made at the same time as the additions of the organic reactants, it will not necessarily be a continuous addition. The constraints of maintaining a substantially constant pH may make it necessary to temporarily halt the addition of the acid acceptor while the addition of the organic reactants continues. The concentration of the aqueous solution of acid acceptor may be adjusted so that the computer controlling the addition may direct a continuous stream of the solution into the stirred reactor. The computer program controlling the additions is written in Microsoft Basic language, using subroutines purchased as part of an A to D converter from Keithley Instruments of Cleveland, Ohio. With this program, the computer calculates a control signal between 0 and 100% and writes it to the A to D converter which sends the signal to an I & P converter, thence to the control device. In summary the program handles the following tasks:
Charging calculations for the ester and organotin halide solution;
Operator interface screens;
Ester mass flow rate control;
Organotin halide solution mass flow rate control;
pH control;
Fresh water flow control;
Reactor temperature control;
Separation column level control;
Wash column level control;
Temperature monitoring;
Real time graphs;
Data storage; and
Start-up and shut-down control.

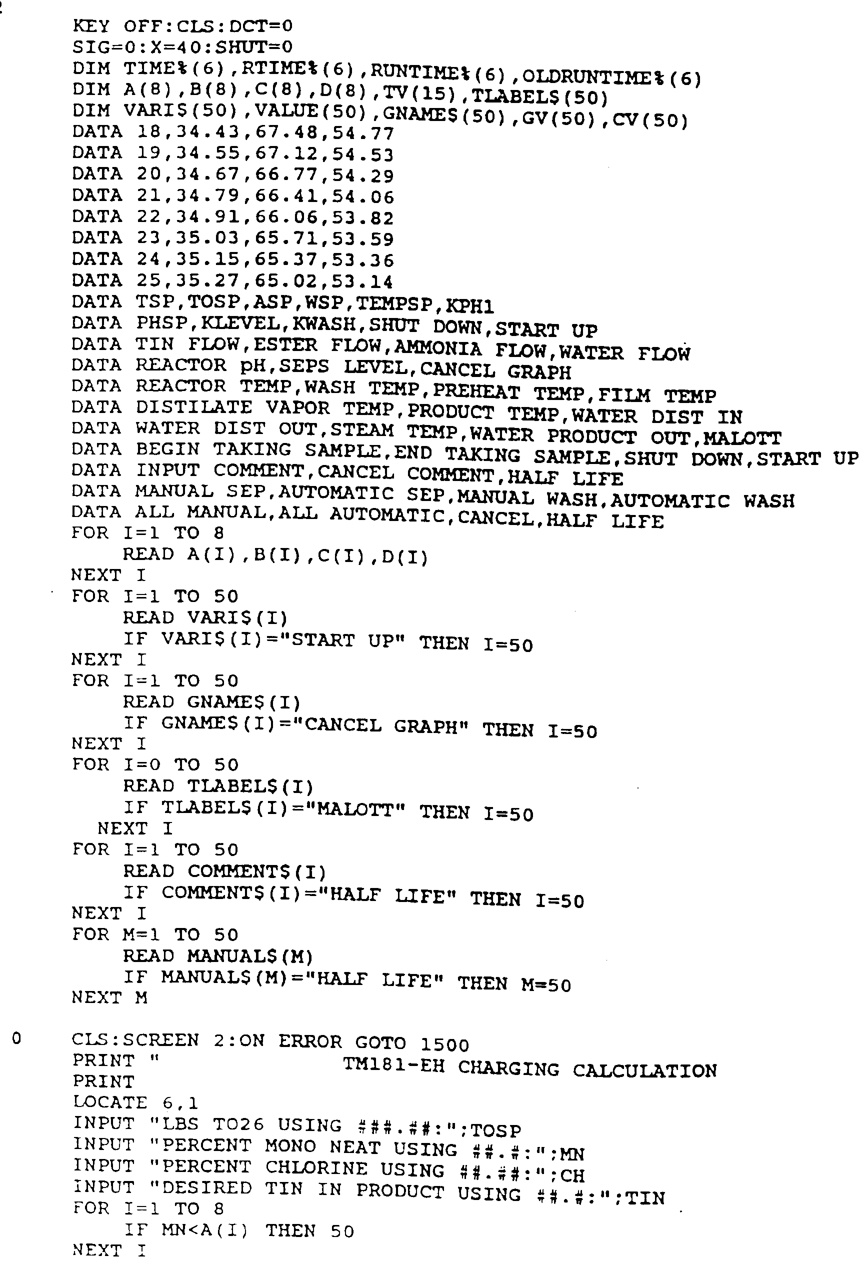

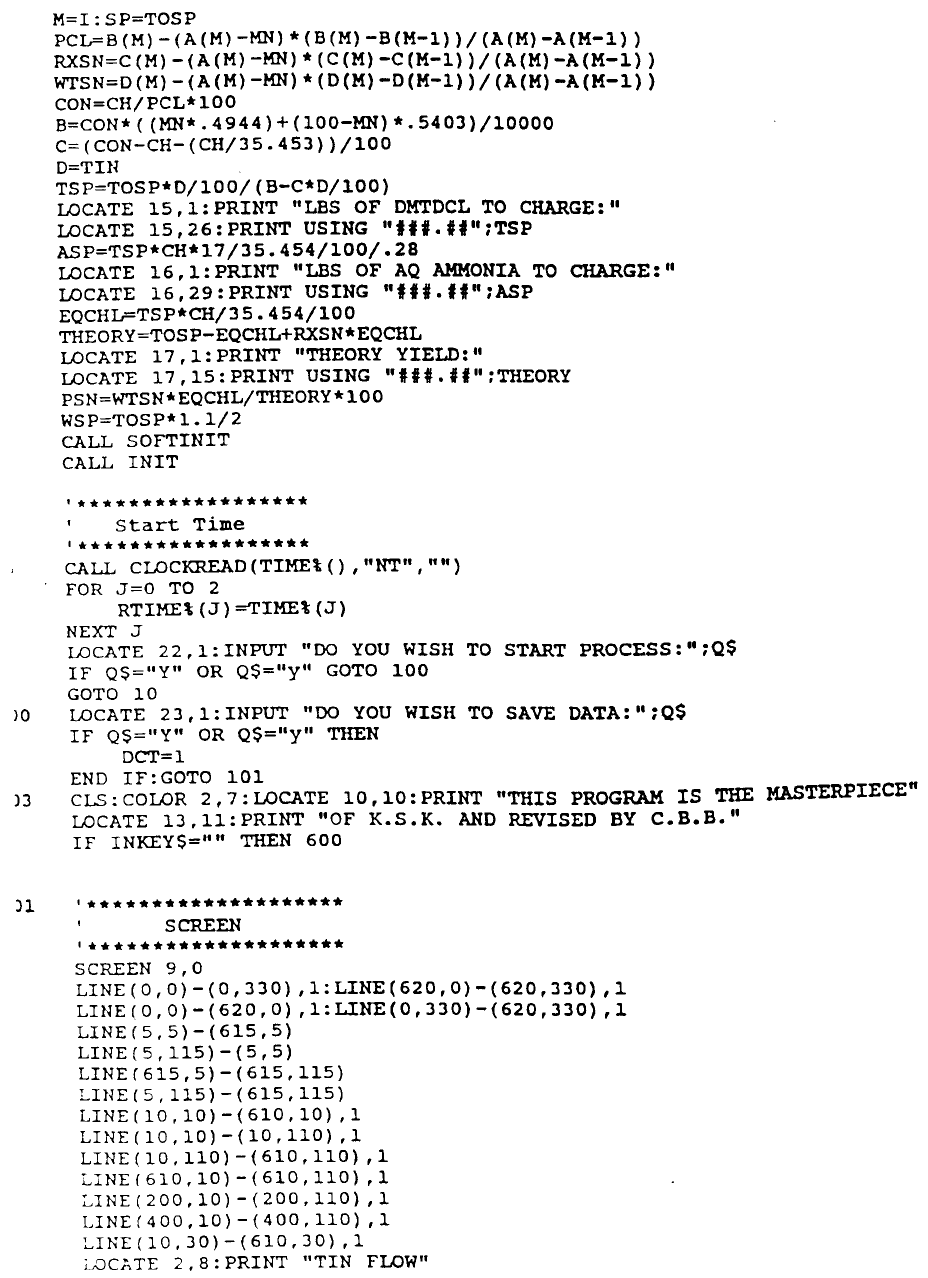

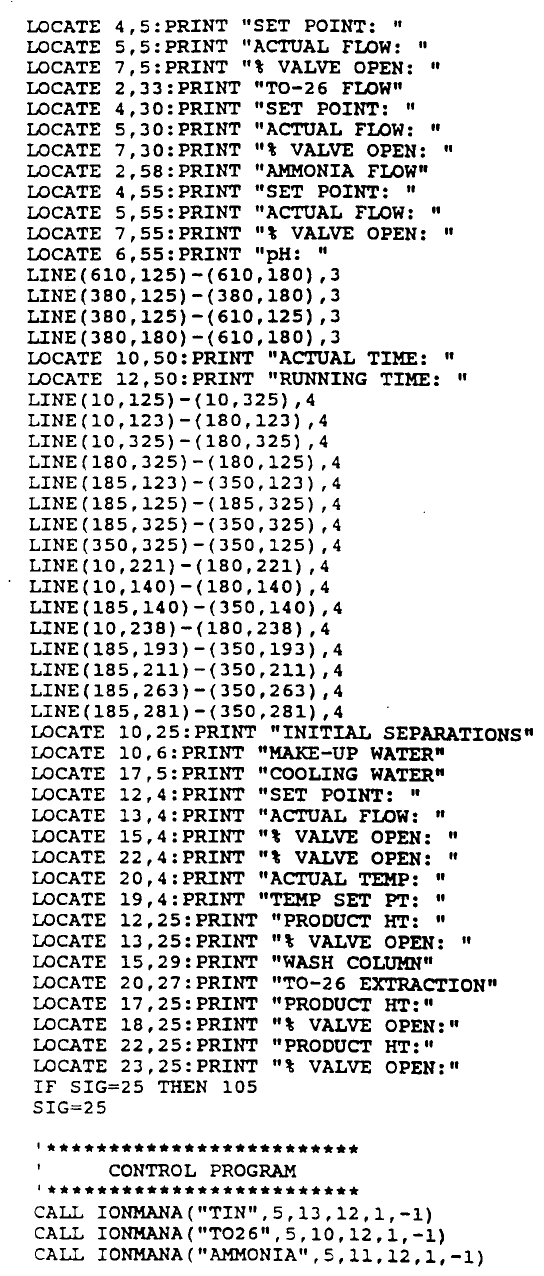

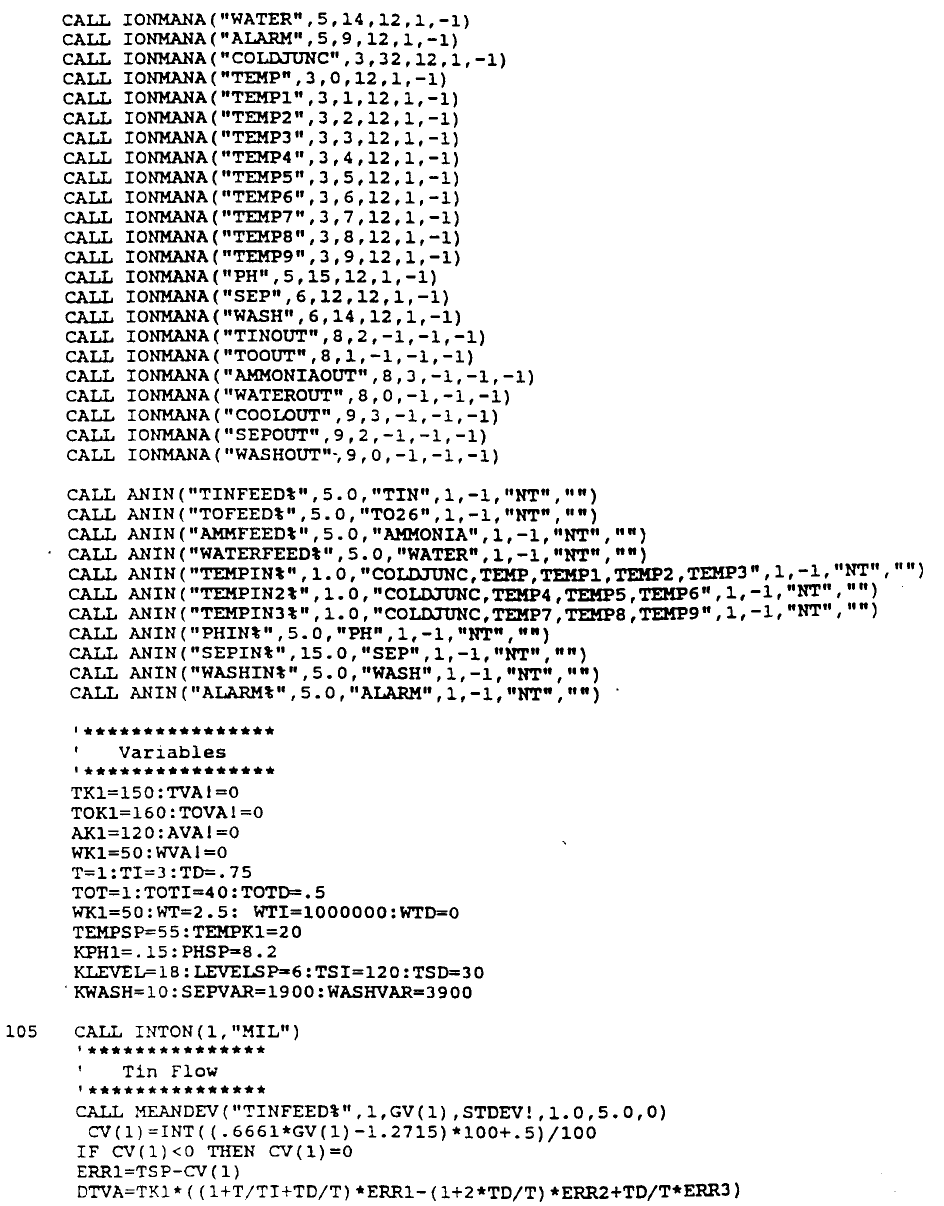

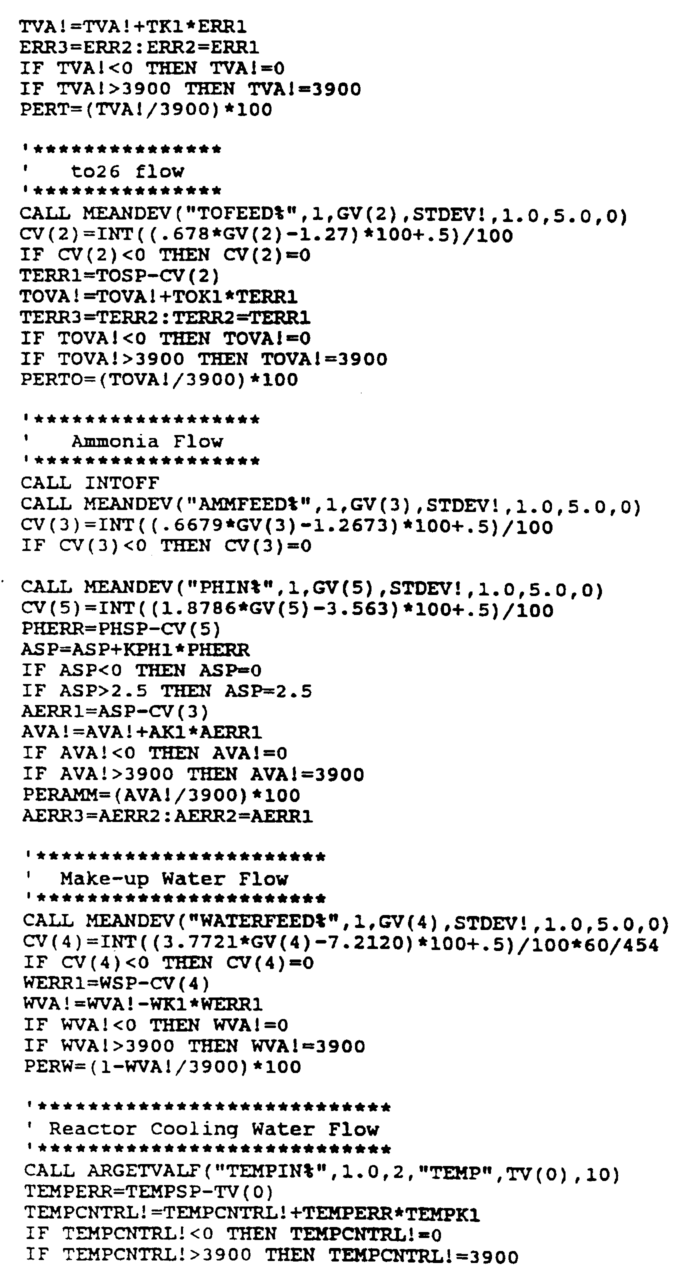

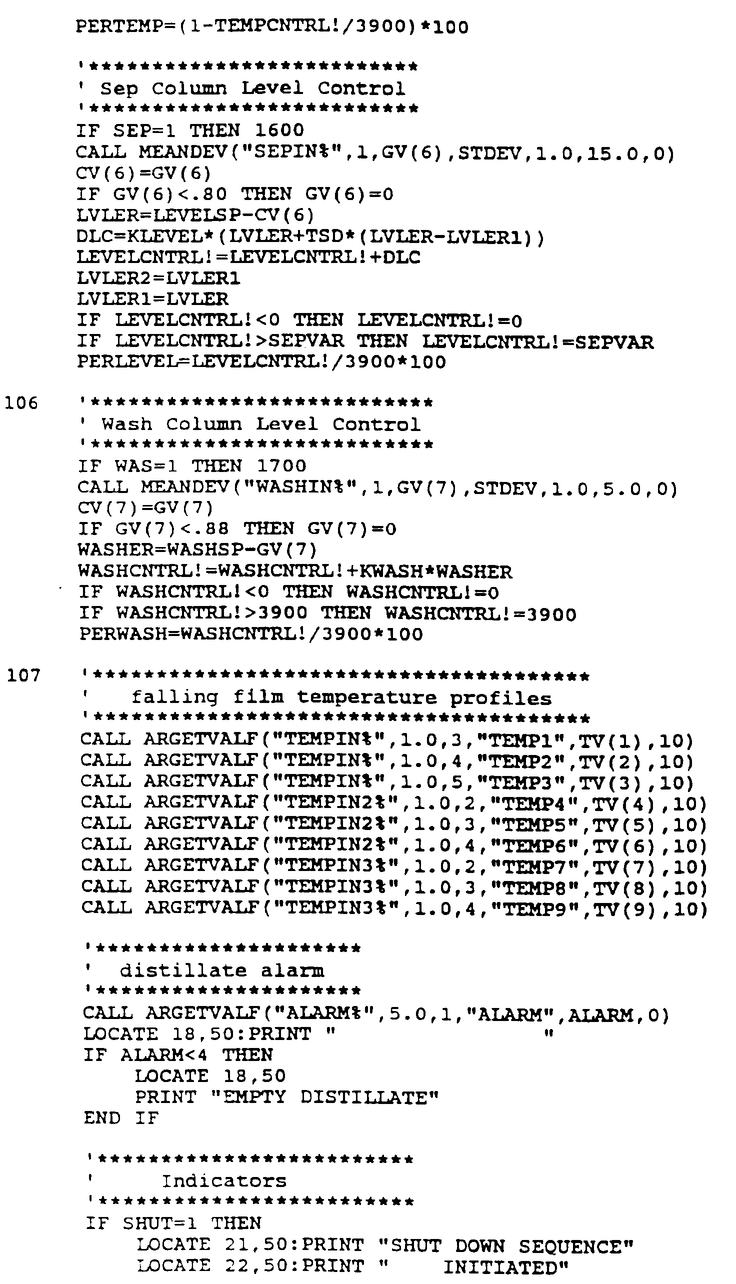

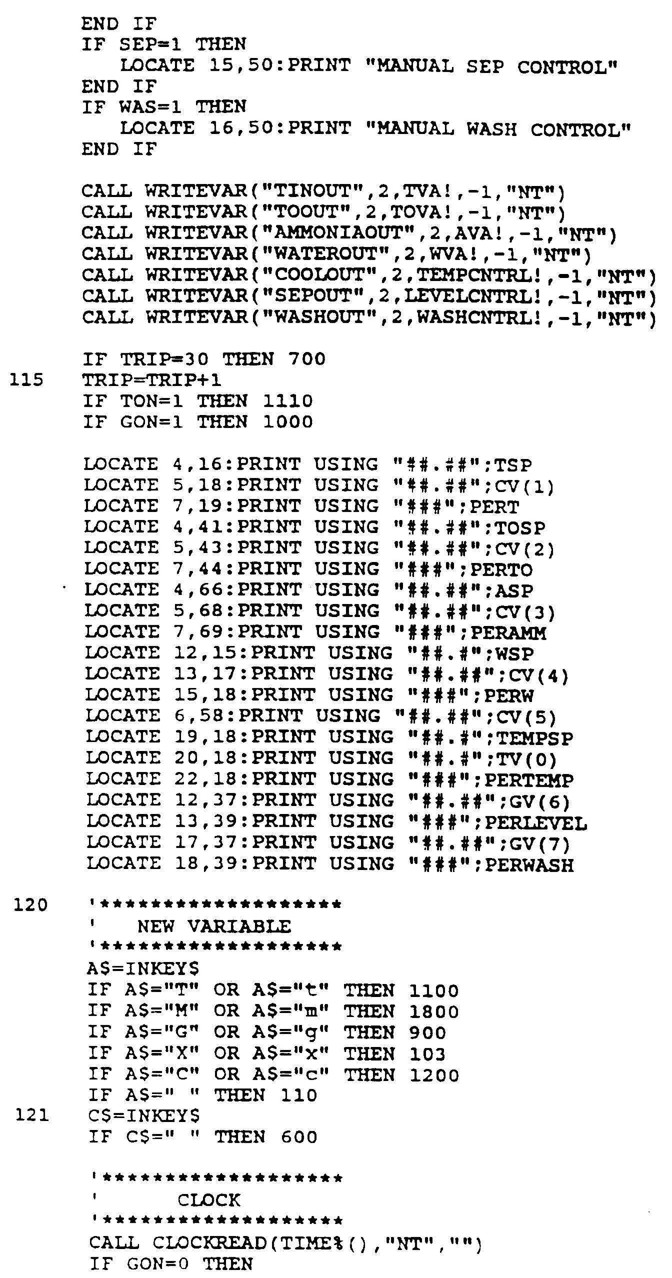

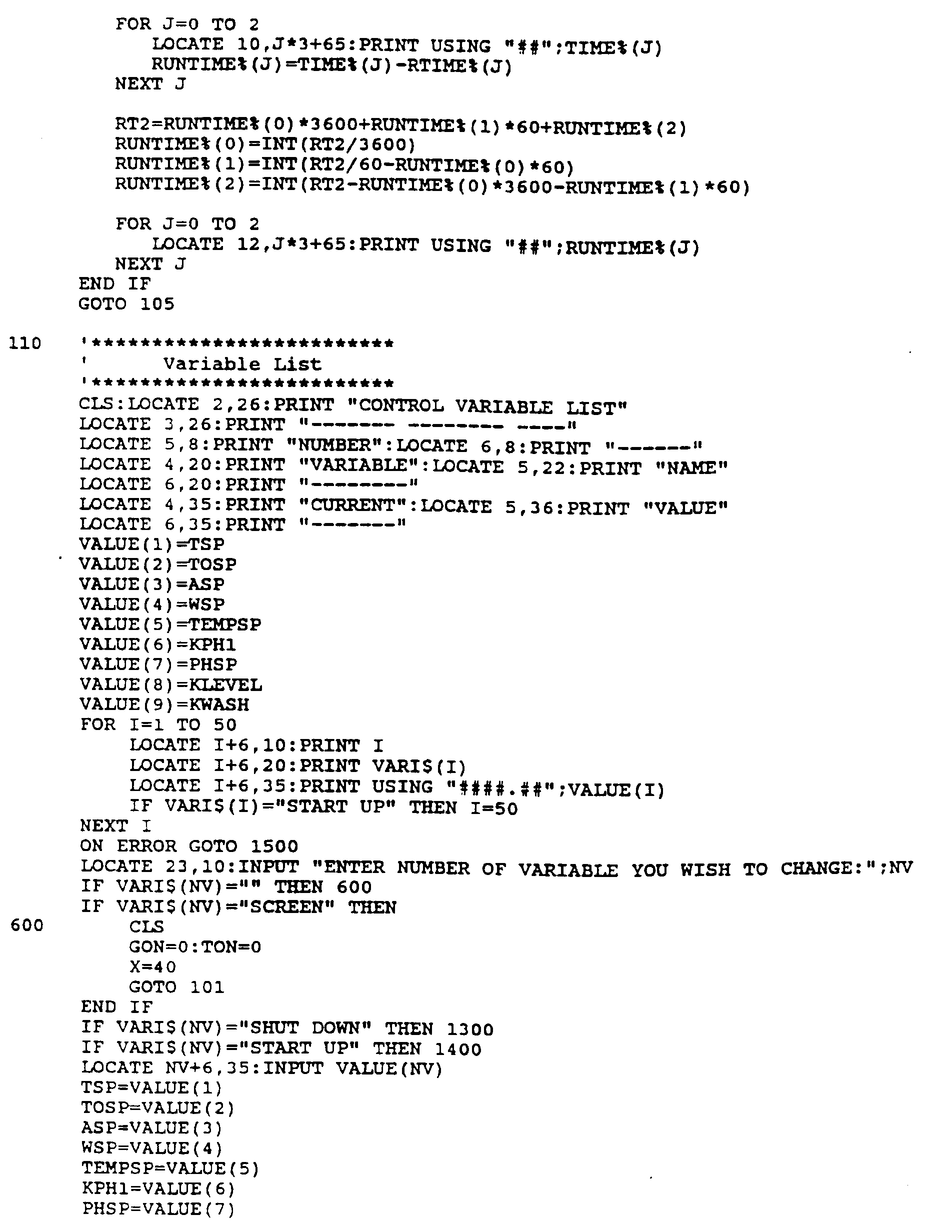

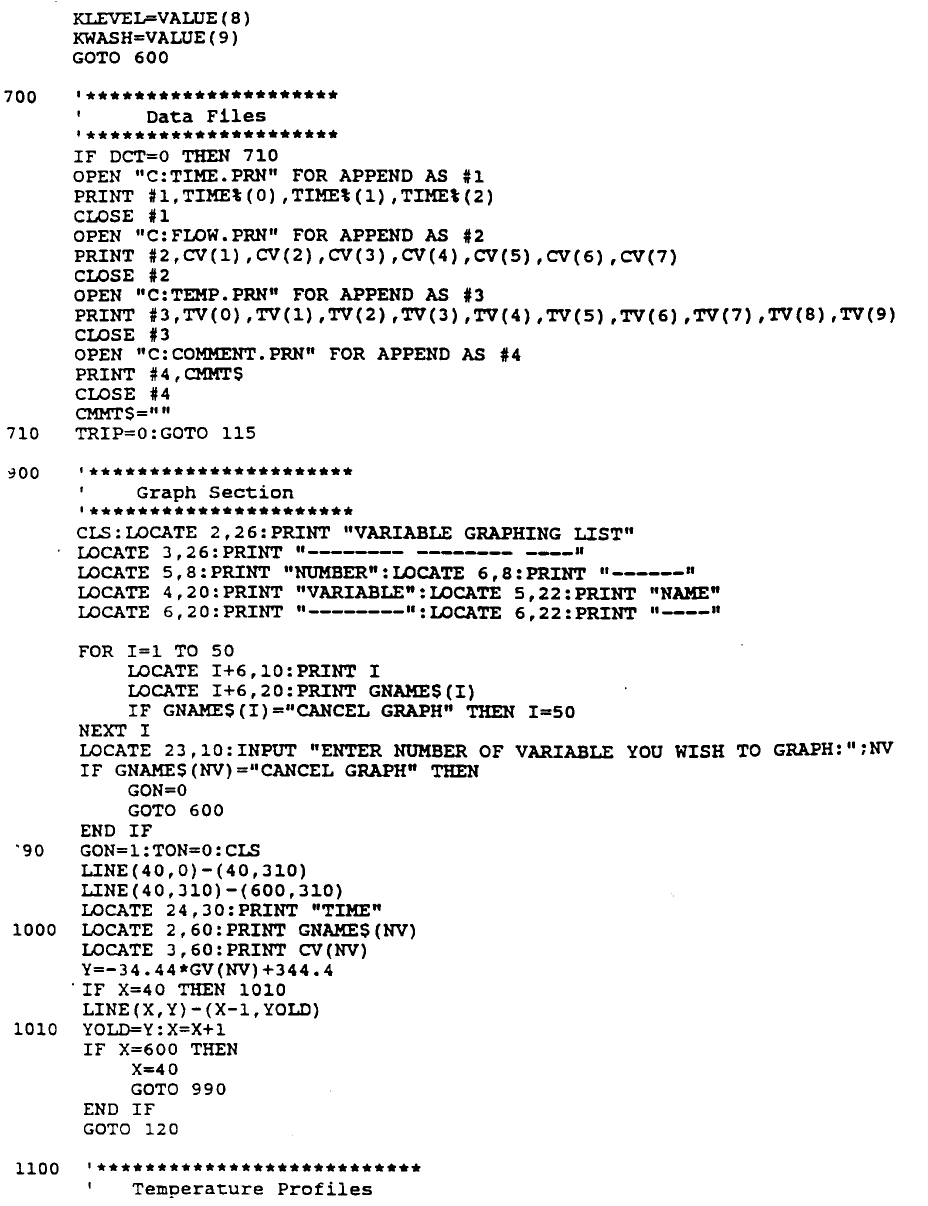

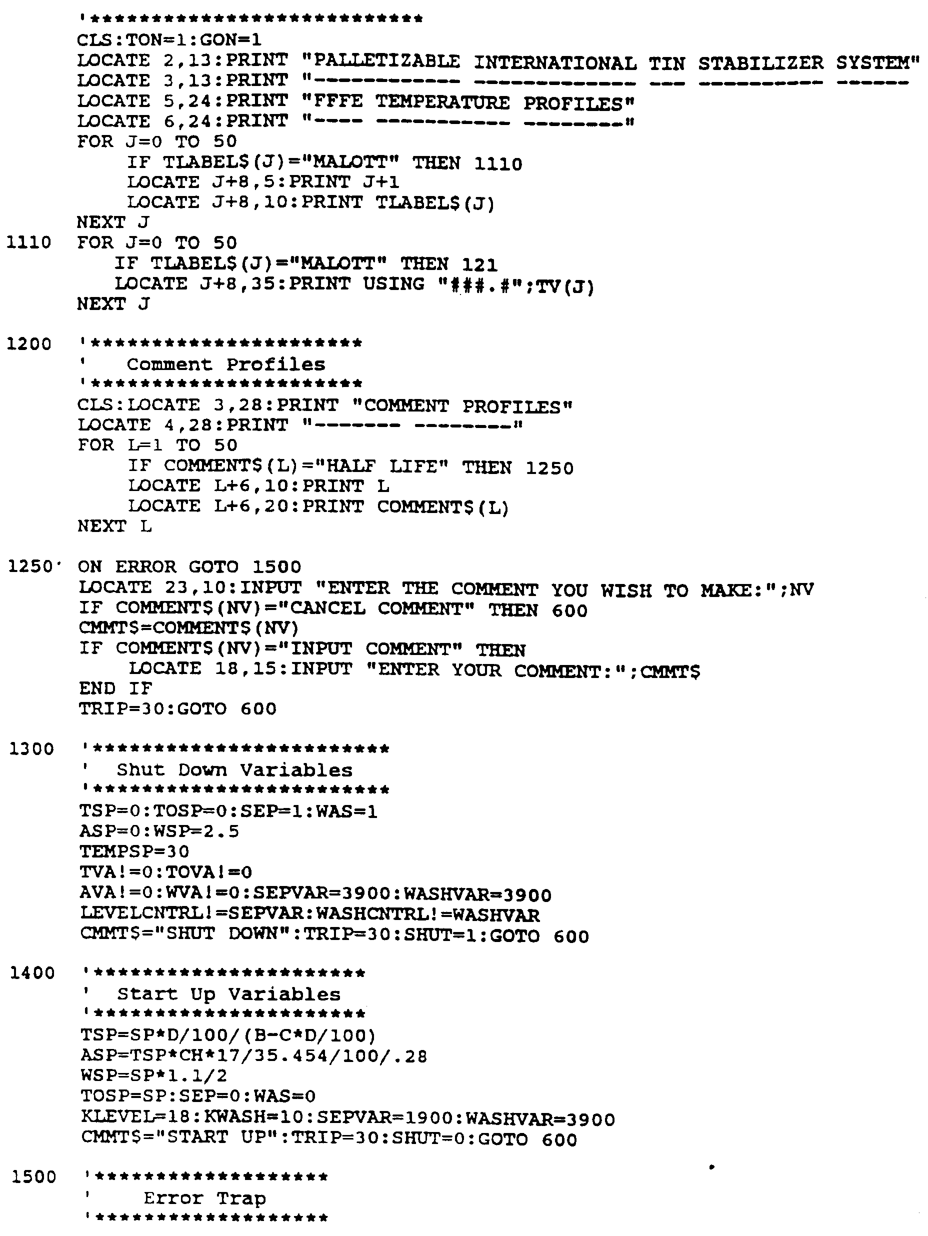

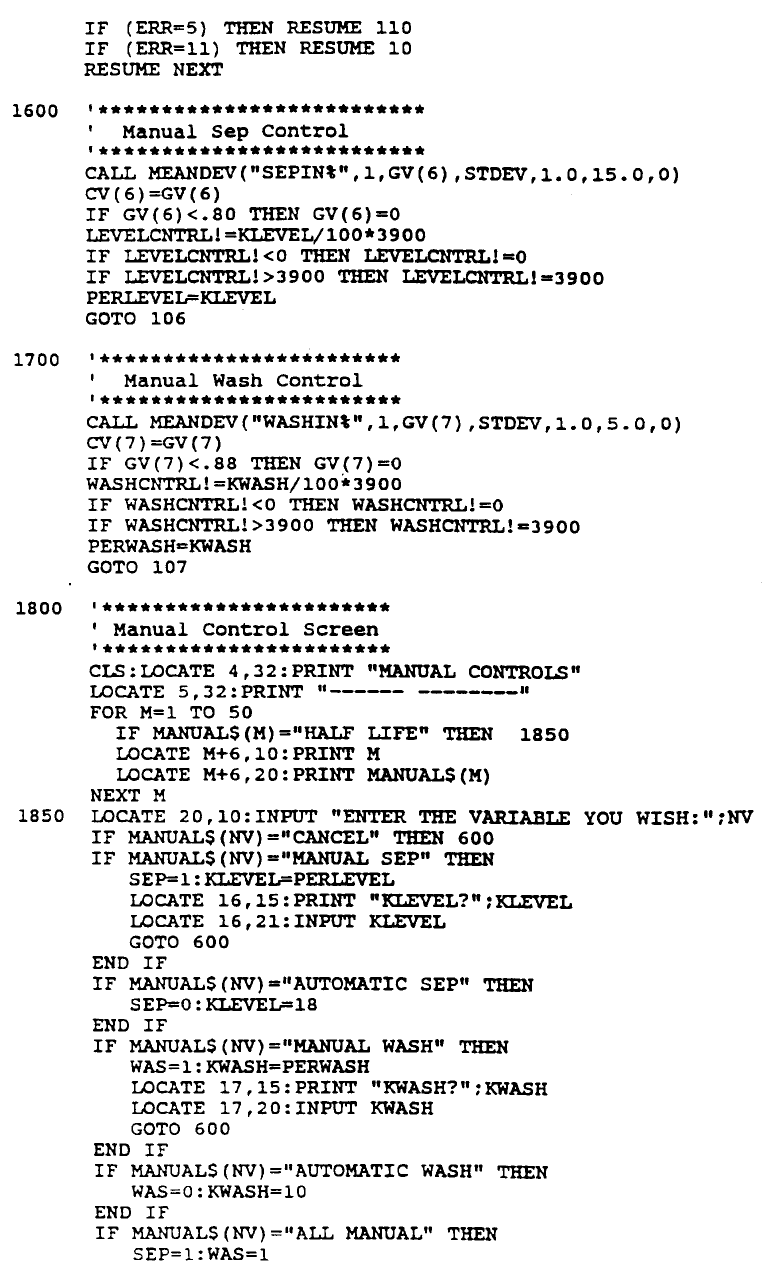

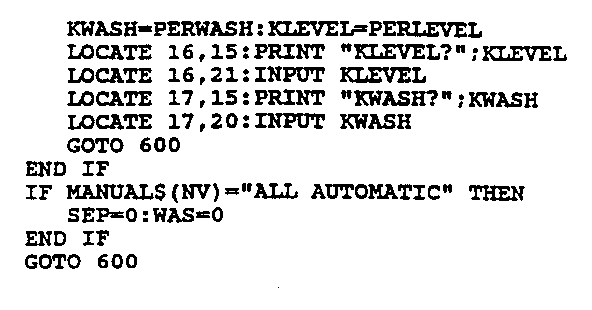

It will be apparent to one of ordinary skill that although it is much more economical to operate the method of this invention in but one agitated vessel as described hereinabove and in the following examples, there is no reason why the vigorous agitation of the reaction mixture could not be conducted in a series of agitated vessels before separation is commenced. Thus, the operation of this method with its essential agitation, as defined herein, in more than one agitated vessel is considered equivalent to its operation in but one.

### EXAMPLE 1

Twenty-seven hundred grams of water were placed in a 3 liter reactor having a diameter of 127 mm (5") and equipped with a center-mounted laboratory style mixer having two 63.5 mm (2.5"-inch) diameter LIGHTNIN A310 impellers spaced 10.2 cm (4 inches) apart on the mixer shaft. The mixing was started at a shaft speed of about 1300 RPM and the addition of a 50 % by weight aqueous solution of alkyltin chloride (80% dimethyltin dichloride, 20 % monomethyltin trichloride by weight) at 210 grams/minute, 2-ethylhexylthioglycolate at 213 grams/minute, water at 107 grams per minute, and concentrated ammonium hydroxide (28 %by weight) was started. The two organic reactants were added continuously in essentially stoichiometric proportions as controlled by a computer, but the addition of the ammonium hydroxide was controlled by the computer to maintain a constant pH of 8.2. About 60 grams/minute of the acid acceptor was added during the course of the continuous preparation of the alkyltin 2-ethylhexylthioglycolate, which was continued for about 5 hours. The liquid level in the reactor was 20.3 cm (8 inches); the operating volume was, therefore, 2.575 liters (0.68 US gallon) and the Z-factor was 1.6. At this mixer speed, the turnover rate was about 130 per minute and the average bulk fluid velocity was about 26.8 m (88 feet)/minute. The additions and a continuous withdrawal of the reaction mixture into a gravity settling separation unit were commenced simultaneously at the same rate. The mixture separated quickly and the organic phase was washed with water and dried by heating under vacuum. The residence time in the stirred reaction vessel was about 4.5 minutes. A sample of the dried product had a tin content of 18.8 % by Refractive Index measurement, 18.96 % by atomic absorption spectra, and 18.6 % by X-ray analysis. The theoretical content of tin in the product, taking into account the amounts of ester and alkyltin chloride charged and the concentrations of dimethyltin and monomethyltin chlorides therein, is 18.9 % by weight.

### EXAMPLE 2

An 18.9 l (five-gallon), baffled cylindrical reactor vessel, having a diameter of 29.2 cm (11.5 inches) was charged with 15 l (33 pounds) of water and agitation was started with a top-entering center-mounted LIGHTNIN Series XDQ, Model XDQ-75SCR mixer equipped with dual A310 laser foil impellers having a 13.2 cm (5.2 inch) diameter and spaced 10.2 cm (4 inches) apart. Said mixer has a 560 W (0.75 HP), variable speed (1750 RPM max), DC motor. The pumping rate of the impellers was 3835 l (1013 gallons) per minute and the fluid velocity across the impellers was 57.3m (188 feet) per minute. The simultaneous addition of the aqueous solution of the mixture of dimethyltin dichloride and monomethyltin trichloride (like that in Example 1), the 2-ethylhexylthioglycolate, water, and the ammonium hydroxide was then started. The rates of addition of the organic reactants were: 1.21 kg (2.67) pounds per minute of the alkyltin chloride, 0.62 l (1.36 pounds) per minute of water, and 1.22 l (2.7 pounds) per minute of the thioglycolate. The ammonium hydroxide was added at a rate sufficient to maintain the pH at 8.2 (about 4.54 g or 1 pound per minute). The additions were continued for 109 minutes and the temperature was maintained at 45° C. Withdrawal of the reaction mixture at a rate equal to the combined addition rates commenced as the mixture overflowed from the reactor and the mixture was continuously led into a separation tank where the aqueous phase separated quickly and cleanly from the organic phase. Said aqueous phase contained only 360 ppm of tin - an indication of the completeness of the desired reaction and lack of side reactions. The product phase was washed with fresh water and dried with heat and vacuum. The percent tin in the dry product was 18.8 by the refractive index method, 18.9 by the X-ray method, and 18.83 by density.

## Claims

1. A method for the continuous manufacture of an alkyltin thiocarboxylic acid ester comprising simultaneously adding an alkyltin halide, a thiocarboxylic acid ester, and an acid acceptor to an agitated aqueous medium in a reaction vessel over an indefinite period of time, agitating the mixture with one or more impellers at a turnover per minute rate of at least 90 at a residence time of 5 minutes or more and at least 110 at a residence time of 3.6 minutes or more throughout the volume of the mixture, maintaining the resulting reaction mixture at a pH greater than 7 but not more than 8.2, continuously withdrawing the mixture from said reaction vessel simultaneously with the addition of the reactants, and continuously separating it as it is withdrawn into an aqueous phase and an organic phase without the need for demulsification means.

2. A method according to claim 1 wherein the agitation imparts a fluid velocity across the impeller(s) of at least 15.2 m (50 feet) per minute.

3. A method according to claim 1 or claim 2 wherein the pH is from 8 to 8.2.

4. A method according to any preceding claim wherein the turnover rate is at least 120 per minute.

5. A method according to any preceding claim wherein the reaction is carried out in a single agitated vessel.

6. A method according to any preceding claim wherein the alkyltin halide, the ester, and the acid acceptor are added beneath the surface of the liquid in the reaction vessel.

7. A method according to any preceding claim wherein the alkyltin thiocarboxylic ester has the structure:
RₓSn[S(CH₂)ₙ(COOR']₄₋ₓ
wherein x is 1 or 2; n is 1 or 2; R is an alkyl group having from one to four carbon atoms; and R' is an alkyl group having from eight to sixteen carbon atoms.

8. A method according to claim 7 wherein R is methyl.

9. A method according to claim 7 or claim 8 wherein R' is 2-ethylhexyl.

## Patentansprüche

1. Verfahren zur kontinuierlichen Herstellung eines Alkylzinnthiocarbonsäureesters, bei dem man gleichzeitig ein Alkylzinnhalogenid, einen Thiocarbonsäureester und einen Säureakzeptor einem gerührten wäßrigen Medium in einem Reaktionsbehälter über eine unbestimmte Zeitdauer zusetzt, das Gemisch mit einem oder mehreren Flügelrührern bei einer Umwandlungsrate je Minute von wenigstens 90 bei einer Verweilzeit von 5 min oder mehr und von wenigstens 110 bei einer Verweilzeit von 3,6 min oder mehr in dem gesamten Volumen des Gemisches, das resultierende Reaktionsgemisch auf einem pH-Wert größer als 7, aber nicht größer als 8,2 hält, das Gemisch kontinuierlich aus dem Reaktionsbehälter gleichzeitig mit der Zugabe der Reaktionspartner abzieht und es kontinuierlich, während es abgezogen wird, in eine wäßrige Phase und eine organische Phase ohne Notwendigkeit eines Demulgiermittels trennt.

2. Verfahren nach Anspruch 1, bei dem das Rühren eine Fluidgeschwindigkeit über dem Impeller oder den Impellern von wenigstens 15,2 m (50 ft) je Minute verleiht.

3. Verfahren nach Anspruch 1 oder 2, bei dem der pH-Wert bei 8 bis 8,2 liegt.

4. Verfahren nach einem der vorausgehenden Ansprüchek bei dem die Umwandlungsrate wenigstens 120 je Minute beträgt.

5. Verfahren nach einem der vorausgehenden Ansprüche, bei dem die Umsetzung in einem einzigen gerührten Behälter durchgeführt wird.

6. Verfahren nach einem der vorausgehenden Ansprüche, bei dem das Alkylzinnhalogenid, der Ester und der Säureakzeptor unter der Oberfläche der Flüssigkeit in dem Reaktionsbehälter zugegeben werden.

7. Verfahren nach einem der vorausgehenden Ansprüche, bei dem der Alkylzinnthiocarbonsäureester die Struktur
RₓSN[S(CH₂)ₙ(COOR']₄₋ₓ
hat, worin x 1 oder 2 ist, n 1 oder 2 ist, R eine Alkylgruppe mit 1 bis 4 Kohlenstoffatomen ist und R' eine Alkylgruppe mit 8 bis 16 Kohlenstoffatomen ist.

8. Verfahren nach Anspruch 7, bei dem R Methyl ist.

9. Verfahren nach Anspruch 7 oder 8, bei dem R' 2-Ethylhexyl ist.

## Revendications

1. Procédé de fabrication continue d'un ester d'acide alkyltine-thiocarboxylique comprenant l'adjonction simultanée d'un halogénure d'alkyltine, d'un ester d'acide thiocarboxylique et d'un accepteur d'acide à un milieu aqueux agité dans une cuve à réaction pendant une durée indéfinie, l'agitation du mélange avec une ou plusieurs hélices à une vitesse de rotation d'au moins 90 tours par minute à un temps de résidence de 5 minutes ou plus et d'au moins 110 tours par minute à un temps de résidence de 3,6 minutes ou plus dans tout le volume du mélange, le maintien du mélange de réaction résultant à un pH supérieur à 7 mais ne dépassant pas 8,2, le retrait continu du mélange de ladite cuve à réaction simultanément à l'adjonction des réactifs, et sa séparation continue au fur et à mesure qu'il est retiré en une phase aqueuse et une phase organique sans la nécessité de moyens de rupture d'émulsion.

2. Procédé selon la revendication 1, où l'agitation confère au fluide une vitesse à travers la ou les hélices d'au moins 15,2 m (50 pieds) par minute.

3. Procédé selon la revendication 1 ou la revendication 2, où le pH est de 8 à 8,2.

4. Procédé selon l'une quelconque des revendications précédentes, où la vitesse de rotation est d'au moins 120 tours par minute.

5. Procédé selon l'une quelconque des revendications précédentes, où la réaction est effectuée dans une seule cuve agitée.

6. Procédé selon l'une quelconque des revendications précédentes, où l'halogénure d'alkyltine, l'ester et l'accepteur d'acide sont ajoutés sous la surface du liquide dans la cuve à réaction.

7. Procédé selon l'une quelconque des revendications précédentes, où l'ester d'acide alkyltine-thiocarboxylique a la structure : RₓSn[S(CH₂)ₙ(COOR')]₄₋ₓ où x est 1 ou 2 ; n est 1 ou 2 ; R est un groupe alkyle ayant d'un à quatre atomes de carbone ; et R' est un groupe alkyle ayant de huit à seize atomes de carbone.

8. Procédé selon la revendication 7, où R est du méthyle.

9. Procédé selon la revendication 7 ou la revendication 8, où R' est du 2-éthylhexyle.
